# EUROPEAN PATENT APPLICATION

(11) **EP 3 543 771 A1**
(43) Date of publication of application: **25.09.2019**
(21) Application number: 19163095.3
(22) Date of filing: 15.03.2019
(51) Int. Cl.: G02B 27/01, G02B 19/00, G02B 5/02

(54) **HEAD-UP DISPLAY AND MOVING OBJECT**

(30) Priority: 20.03.2018 JP 2018052989
(71) Applicant: Panasonic Intellectual Property Management Co., Ltd., Osaka-shi, Osaka 540-6207 (JP)
(72) Inventor: ASAI, Yosuke, Osaka 540-6207 (JP)
(74) Representative: Eisenführ Speiser

(57) **Abstract**

The present invention relates to a head-up display including a light source unit including one or more first light source elements emitting a first luminescent color and one or more second light source elements emitting a different second luminescent color that are arranged side by side in a first direction, a first lens including an incident surface and an emission surface, a diffusion member disposed at a side of the emission surface, a spatial light modulation element that includes an incident surface through which light enters, modulates the light with image information, and makes the light emit from an emission surface, and an optical unit. The first lens changes an optical path of the light emitted from the light source unit, and the lights emitted respectively from the first and second light source element are superimposed in a predetermined region on the incident surface of the spatial light modulation element.

## Description

### BACKGROUND

### 1. Technical Field

The present disclosure relates to a head-up display that displays an image for allowing a virtual image to be visually recognized from an observer's eye-box.

### 2. Related Art

JP 2010-276893 A discloses a head-up display in which emission lights from light sources having different luminescent colors behind a liquid crystal panel are superimposed by a polarizing member and transmitted illumination of the liquid crystal panel is performed. The head-up display includes a first light emitting element that emits a first light of a first color, a second light emitting element that emits a second light of a second color, and the polarizing member that reflects an illumination light. Thereby, the head-up display in which a display light has a desired chromaticity is provided.

### SUMMARY

According to the head-up display of Patent Literature 1, the polarizing member that reflects the illumination light is used in order to superimpose the first light of the first color and the second light of the second color. Therefore, it is necessary to separately secure optical paths of the first light and the second light, and the head-up display has a complicated configuration that causes an increase in size of an illumination optical system.

The present disclosure provides a head-up display that efficiently displays a specific color with high luminance with a compact and simple configuration.

### Solution to Problem

According to a first aspect of the present disclosure, a head-up display is provided. The head-up display includes a light source unit including at least one or more first light source elements emitting lights of a first luminescent color and at least one or more second light source elements emitting lights of a second luminescent color different from the first luminescent color that are arranged side by side in a first direction, a first lens including an incident surface through the light emitted from the light source unit enters and an emission surface from which the incident light emits, a diffusion member disposed at a side of the emission surface of the first lens, a spatial light modulation element that includes an incident surface through which the light emitted from the light source unit and transmitted through the first lens and the diffusion member enters, modulates the light with image information, and makes the light emit from an emission surface, and an optical unit that projects the light emitted from the spatial light modulation element. The first lens changes an optical path of the light emitted from the light source unit, and the lights emitted respectively from the first light source element and the second light source element are superimposed in a predetermined region on the incident surface of the spatial light modulation element.

According to a second aspect of the present disclosure, a moving object (an automobile vehicle, a railway vehicle, an aircraft, a ship, and so on) with the head-up display described above is provided.

According to the head-up display of the present disclosure, lights emitted from a plurality of light source elements having at least two mutually different luminescent colors illuminate so as to be superimposed by a first lens in a predetermined region on an incident surface of a spatial modulation element. Therefore, the head-up display efficiently displays a specific color with high luminance in a virtual image (image) to be displayed.

### BRIEF DESCRIPTION OF DRAWINGS

Fig. 1 is a schematic view illustrating a vehicle equipped with a head-up display according to a first exemplary embodiment;
Fig. 2 is a view for describing a configuration of a display unit of the head-up display according to the first exemplary embodiment;
Fig. 3A is a view describing optical paths (optical paths seen from Y-axis direction) of the head-up display according to the first exemplary embodiment;
Fig. 3B is a view describing optical paths (optical paths seen from X-axis direction) of the head-up display according to the first exemplary embodiment;
Fig. 4A is a view illustrating the optical paths seen from the Y-axis direction according to the first exemplary embodiment;
Fig. 4B is a view for describing a superposition of the optical paths (optical paths seen from the Y-axis direction) of lights emitted from a light source unit;
Fig. 4C is a view illustrating the optical paths seen from the X-axis direction according to the first exemplary embodiment;
Fig. 5A is a graph (central portion in the X-axis direction) illustrating angular distribution of an incident light of a diffusion plate when a first light source element emits light according to the first exemplary embodiment;
Fig. 5B is a graph (central portion in the X-axis direction) illustrating angular distribution of an incident light of the diffusion plate when a second light source element emits light according to the first exemplary embodiment;
Fig. 5C is a graph (central portion in the Y-axis direction) illustrating angular distribution of the incident light of the diffusion plate according to the first exemplary embodiment;
Fig. 6A is a graph (central portion in the X-axis direction) illustrating angular distribution of an emission light of a display unit (liquid crystal panel) according to the first exemplary embodiment;
Fig. 6B is a graph (end portion in the X-axis direction) illustrating angular distribution of the emission light of the display unit (liquid crystal panel) according to the first exemplary embodiment;
Fig. 6C is a graph (central portion in the Y-axis direction) illustrating angular distribution of the emission light of the display unit (liquid crystal panel) according to the first exemplary embodiment;
Fig. 7A is a view illustrating optical paths seen from the Y-axis direction when light sources having white luminescent colors emit light according to the first exemplary embodiment;
Fig. 7B is a view illustrating optical paths seen from the Y-axis direction when light sources having red luminescent colors emit light according to the first exemplary embodiment;
Fig. 8 is a view for describing a configuration of the display unit of the head-up display according to a second exemplary embodiment;
Fig. 9A is a graph (central portion in the X-axis direction) illustrating angular distribution of the incident lights of the diffusion plate when the first light source element emits light according to the second exemplary embodiment; and
Fig. 9B is a graph (central portion in the X-axis direction) illustrating angular distribution of the incident light of the diffusion plate when the second light source element emits light according to the second exemplary embodiment.

### DETAILED DESCRIPTION OF PREFERRED EMBODIMENTS

Embodiments will be described in detail hereinafter with reference to the drawings as appropriate. However, more detailed description than necessary will be sometimes omitted. For example, a detailed description of an already well-known matter and an overlap description on substantially the same configuration may be omitted. The above matter is to avoid unnecessary redundancy of the following description and to facilitate understanding by those skilled in the art. Incidentally, the accompanying drawings and the following description are provided to enable those skilled in the art to fully understand the present disclosure, and are not intended to limit the claimed subject matter by them.

### (First exemplary embodiment)

A first exemplary embodiment will be described hereinafter with reference to the accompanying drawings.

### [1-1. Structure]

### [1-1-1. Overall structure]

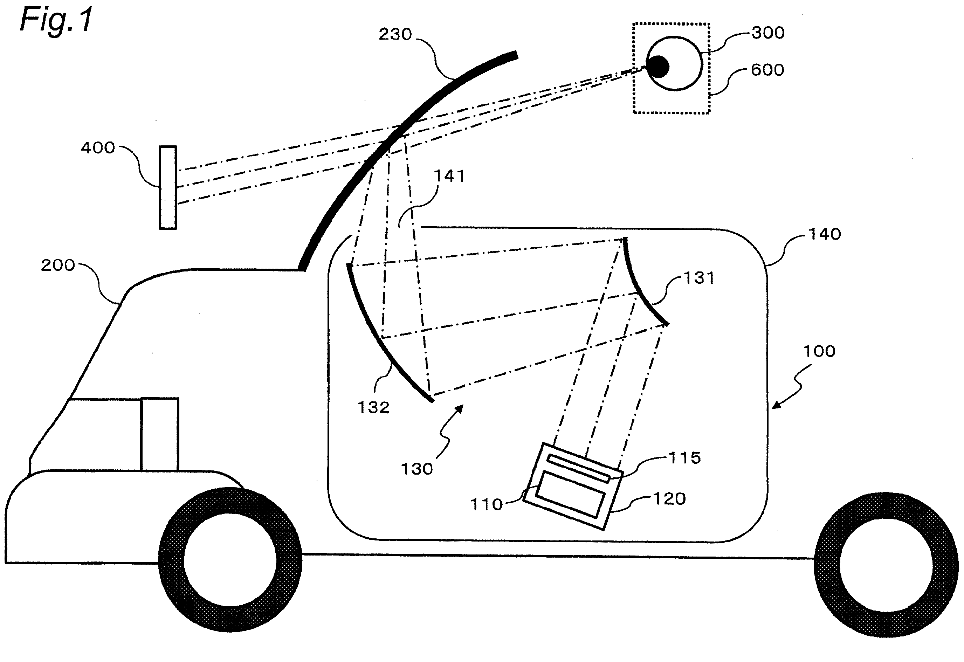

Fig. 1 is a view illustrating a structure of a head-up display mounted on a vehicle according to the first exemplary embodiment. A head-up display 100 is mounted on a vehicle 200 (an example of a moving object) including a windshield 230. The head-up display 100 includes a display unit 120, a reflective optical unit 130, and a housing 140. The display unit 120 includes a lighting device 110 and a liquid crystal panel 115.

The head-up display 100 is a device that projects an image for allowing an observer 300 to visually recognize a virtual image 400 onto the windshield 230.

The lighting device 110 illuminates the liquid crystal panel 115 that is a display element. The liquid crystal panel 115 displays, for example, an image showing a speedometer or a numerical value indicating speed. The liquid crystal panel 115 functions as a spatial light modulation element, and modulates a light from the lighting device 110 with the displayed image. The modulated light is emitted from the liquid crystal panel 115 as a transmitted light. The transmitted light is introduced into an eye-box 600 of the observer 300 via the reflective optical unit 130 and the windshield 230, so that the observer 300 visually recognizes the transmitted light as the virtual image 400. For example, the observer 300 visually recognizes the image of the speedometer or the like as the virtual image 400. Here, the eye-box is an area in which the observer 300 visually recognizes the full virtual image .

The reflective optical unit 130 (an example of an optical element) includes a first mirror 131 and a second mirror 132, and projects a light emitted from the liquid crystal panel 115 onto the windshield 230. The first mirror 131 reflects the light emitted from the liquid crystal panel 115 toward the second mirror 132. The second mirror 132 reflects a light from the first mirror 131 toward the windshield 230. A reflecting surface of the second mirror 132 has a concave shape. The reflective optical unit 130 is not necessarily constituted by two mirrors, and may be constituted by one mirror or three or more mirrors. In addition, a dioptric system such as a lens may be further disposed on an optical path of the reflective optical unit 130.

The housing 140 accommodates the display unit 120 and the reflective optical unit 130, and has an opening 141 through which the light from the reflective optical unit 130 is emitted. The opening 141 may be provided with a transparent cover.

### [1-1-2. Structure of Display Unit]

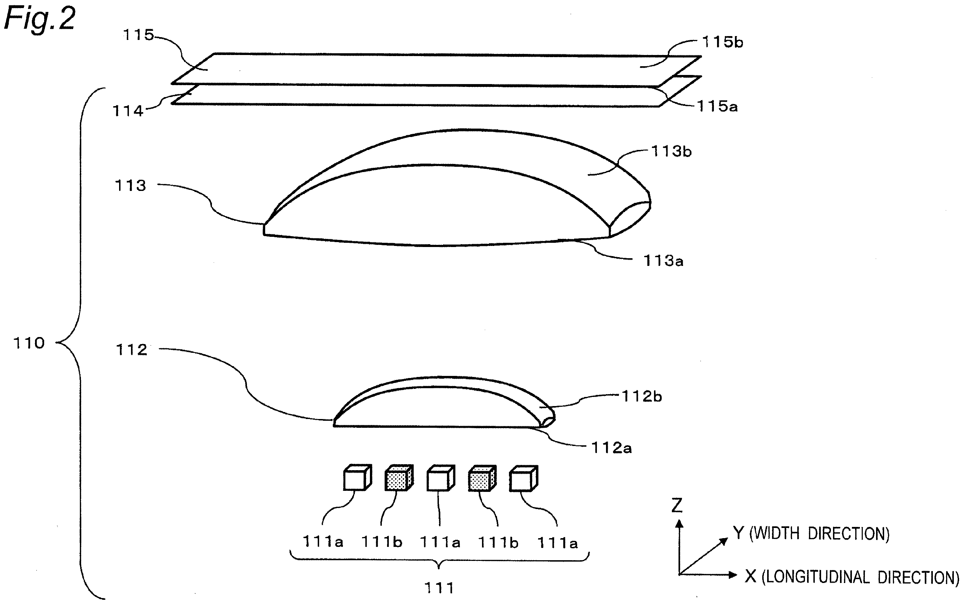

Fig. 2 is a view illustrating a detailed structure of the display unit 120. The display unit 120 includes the lighting device 110 and the liquid crystal panel 115. The liquid crystal panel 115 has an incident surface 115a where a light enters and an emission surface 115b from which the light is emitted. The incident surface 115a and the emission surface 115b have the same rectangular shape.

In addition, in the following description, a three-dimensional orthogonal coordinate system is set in the drawings. That is, an X-axis is set in a direction parallel to a longitudinal direction of the incident surface 115a and the emission surface 115b of the liquid crystal panel 115, a Y-axis is set in a direction parallel to a width direction of the incident surface 115a and the emission surface 115b, and a Z-axis is set in a normal direction of the incident surface 115a and the emission surface 115b. The X-axis direction (longitudinal direction) is an example of a first direction, and the Y-axis direction (width direction) is an example of a second direction.

As shown in Fig. 2, the lighting device 110 includes, for example, a light source unit 111 containing three first light source elements 111a and two second light source elements 111b arranged in a row, a first lens 112 arranged in an emitting direction of the light source unit 111, a second lens 113 arranged in an emitting direction of the first lens 112, and a diffusion plate 114 (an example of a diffusion member) arranged in an emitting direction of the second lens 113.

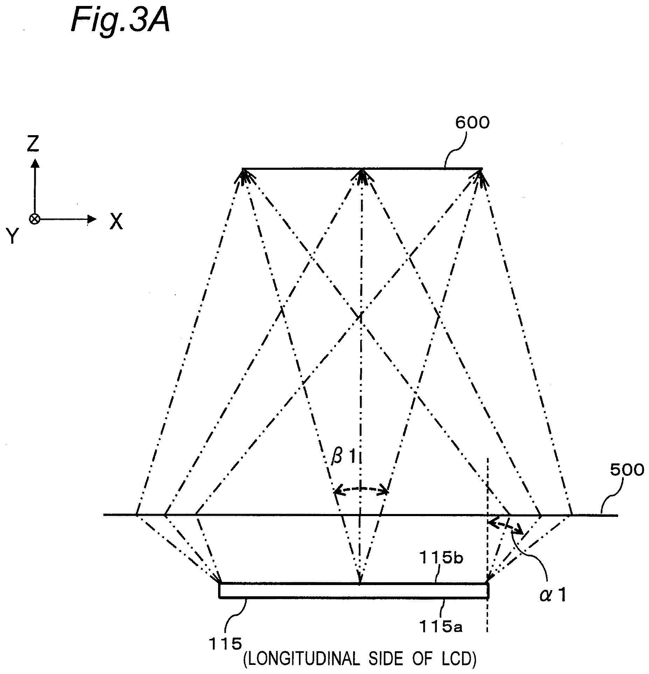

The first light source element 111a and the second light source element 111b are luminous bodies that supply illumination lights to the liquid crystal panel 115, such as, chip type light emitting diodes (LEDs). The first light source element emits light of a first luminescent color and the second light source element emits light of a second luminescent color different from the first luminescent color. In the light source unit 111, the first light source element 111a and the second light source element 111b are arranged in a row in the longitudinal direction (X-axis direction in Fig. 3A).

The light source unit 111 includes at least one first light source element 111a and at least one second light source element 111b arranged in a row. According to the present exemplary embodiment, the first light source element emits a white light and the second light source element emits a red light. As shown in Fig. 2, in the light source unit 111, the first light source element 111a and the second light source element 111b are alternately arranged toward the X-axis direction.

The first lens 112 is arranged close to the light source unit 111 so that an emission light from the light source unit 111 does not leak. The first lens 112 takes in the emission light of the light source unit 111 from an incident surface 112a. In addition, the first lens 112 has a function of deflecting a divergent light of the light source unit 111 to a substantially parallel light in a Y-axis direction and emitting the deflected light.

At least one of the incident surface 112a and an emission surface 112b of the first lens 112 has a convex shape so that the first lens 112 has a positive refractive power. In addition, the convex shapes of the incident surface 112a and the emission surface 112b of the first lens 112 are not necessarily rotationally symmetric with respect to an optical axis, and may be a toroidal shape having different curvatures between the X-axis direction and the Y-axis direction. According to the present exemplary embodiment, the first lens 112 is a plano-convex lens in which only the emission surface 112b has the convex shape.

The emission surface 112b is the convex surface having an aspheric shape in which curvatures are different between the X-axis direction and the Y-axis direction. The shape of the emission surface 112b in the X-axis direction has an aspheric shape such that the emission lights from the light source unit 111 are superimposed in a predetermined region on the diffusion plate 114. Further, the shape of the emission surface 112b in the Y-axis direction has an aspherical shape such that illuminance distribution becomes uniform on the diffusion plate 114.

The second lens 113 has a function of deflecting an emission light of the first lens 112 in a desired direction. According to the present exemplary embodiment, an incident surface 113a of the second lens 113 has a convex shape only in the X-axis direction. Further, a shape of an emission surface 113b of the second lens 113 has a convex shape in which curvatures are different between the X-axis direction and the Y-axis direction. Incidentally, the incident surface 113a of the second lens 113 may have a convex shape having different curvatures between the X-axis direction and the Y-axis direction. In addition, the emission surface 113b of the second lens 113 may have a shape containing a convex shape only in one of the X-axis direction and the Y-axis direction. A refractive power of the second lens 113 is set according to an emission angle of an emission light at an end of the display unit 120 (or an incident angle of an incident light on the diffusion plate 114). Incidentally, the second lens 113 is not always necessary. By setting distance between the first lens 112 and the diffusion plate 114 longer without using the second lens 113, the desired emission angle at the end of the display unit 120 is realized with only the first lens 112.

The first lens 112 and the second lens 113 are made of transparent material having a predetermined refractive index. The refractive index of the transparent material is, for example, 1.4 or more and 1.6 or less. As such transparent material, a resin such as epoxy resin, silicone resin, acrylic resin, polycarbonate or the like is used. According to the present exemplary embodiment, polycarbonate is used in consideration of heat resistance.

The diffusion plate 114 diffuses a light having high directivity that is deflected by the first lens 112 and the second lens 113, and emits the light to the liquid crystal panel 115. As a result, luminance unevenness in a display virtual image that is generated by the light source unit 111 and that is visually recognized by the eye-box 600 is reduced. The diffusion plate 114 may be an optical member having a function of diffusing light, and its surface is constituted by a bead member, a fine uneven structure, and a rough surface, for example. Also, a dot sheet or a permeable milky sheet may be used.

The liquid crystal panel 115 is a transmission type spatial modulation element that spatially modulates a light emitted from the diffusion plate 114. The liquid crystal panel 115 adopts a plane division method, and one pixel includes three subpixels of red, green, and blue. The liquid crystal panel 115 is disposed so that the incident surface 115a is parallel to an emission surface of the lighting device 110.

### [1-1-3. Optical path in head-up display]

Hereinafter, optical paths of the lights emitted from the light source unit 111 in the head-up display 100 of the present exemplary embodiment will be described.

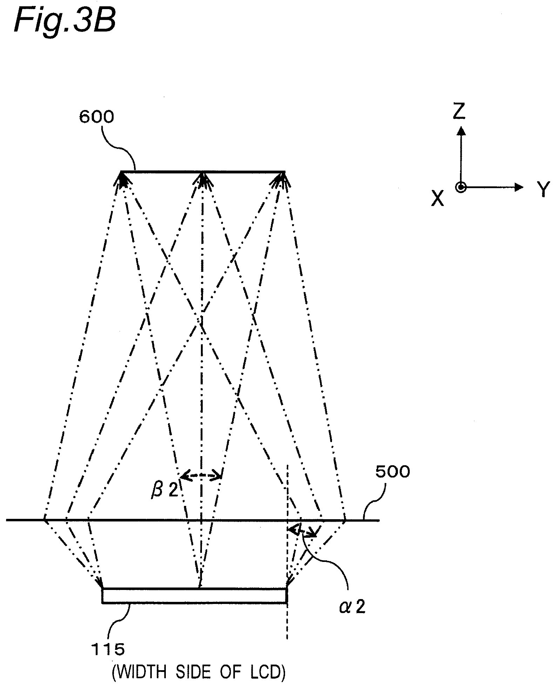

Fig. 3A and Fig. 3B are views illustrating optical paths from the liquid crystal panel 115 to the eye-box 600 in the head-up display 100. The observer 300 visually recognizes the transmitted light of the liquid crystal panel 115 via a virtual image optical system 500. The virtual image optical system 500 is a combination of the reflective optical unit 130 and the windshield 230 shown in Fig. 1. Fig. 3A illustrates the optical paths when seen from the Y-axis direction, and Fig. 3B illustrates the optical paths when seen from the X-axis direction.

When the incident surface 115a of the liquid crystal panel 115 is disposed so as to be parallel to the emission surface of the lighting device 110, an emission light from the liquid crystal panel 115 toward a center of the eye-box 600 is emitted at different emission angles on a central portion and an end portion of the liquid crystal panel 115. Specifically, the end portion of the liquid crystal panel 115 has the emission angle α1 with respect to the emission angle at the central portion of the liquid crystal panel 115. That is, the emission light at the central portion of the liquid crystal panel 115 is emitted in a normal direction of the emission surface 115b, while the emission light at the end portion is emitted toward an outside of the emission surface 115b. This is not the case when the liquid crystal panel 115 is not disposed parallel to the lighting device 110, and the emission light at the central portion has an inclination with respect to the normal direction of the emission surface 115b. In addition, since the eye-box 600 generally has a length in the X-axis direction larger than a length in the Y-axis direction, a light distribution angle β1 in the X-axis direction (see Fig. 3A) is larger than a light distribution angle β2 in the Y-axis direction (see Fig. 3B).

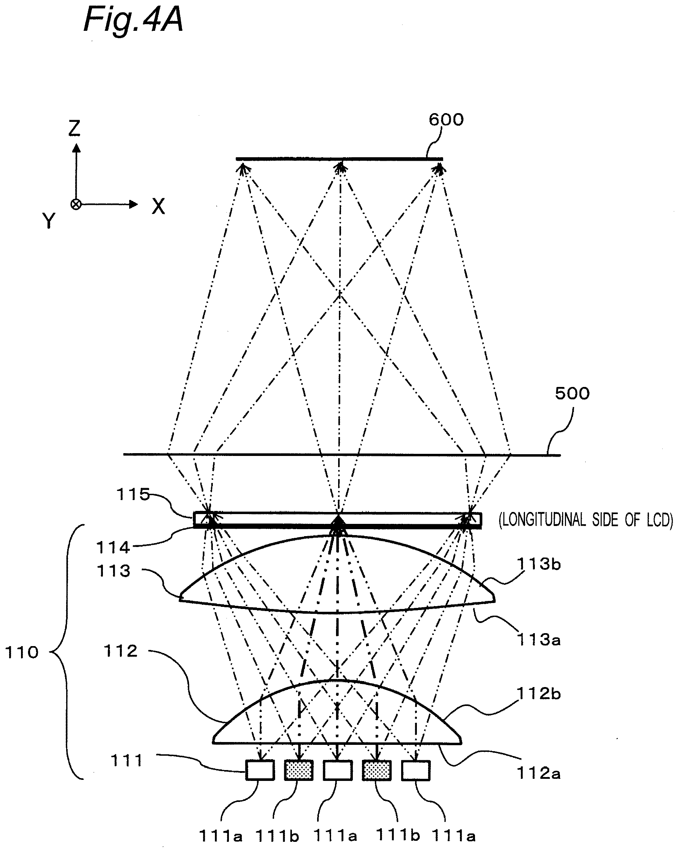

Fig. 4A is a view illustrating optical paths from the light source unit 111 to the eye-box 600 when seen from the Y-axis direction. The first lens 112 deflects the emission light from the light source unit 111 so that the emission lights from the first light source elements 111a and the second light source elements 111b are superimposed at a predetermined position of the diffusion plate 114.

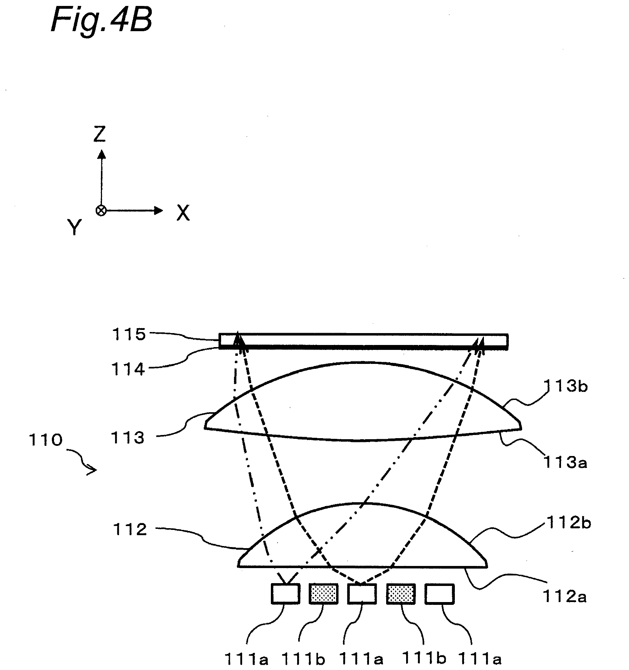

That is, when seen from the Y-axis direction, the refractive power of the first lens 112 is set such that each of the first light source element 111a and the second light source element 111b illuminates an entire surface of the liquid crystal panel 115. For example, as shown in Fig. 4B, both the emission light from the left end first light source element 111a and the emission light from the central second light source element 111b illuminate an entire area of the liquid crystal panel 115. The first light source element 111a and the second light source elements 111b at other positions are the same.

In this manner, a light beam from each of the first light source elements 111a and the second light source elements 111b is irradiated on the entire liquid crystal panel 115 (the same region) so that the light beams are superimposed each other. Therefore, luminance of the virtual image 400 visible within the eye-box 600 becomes uniform.

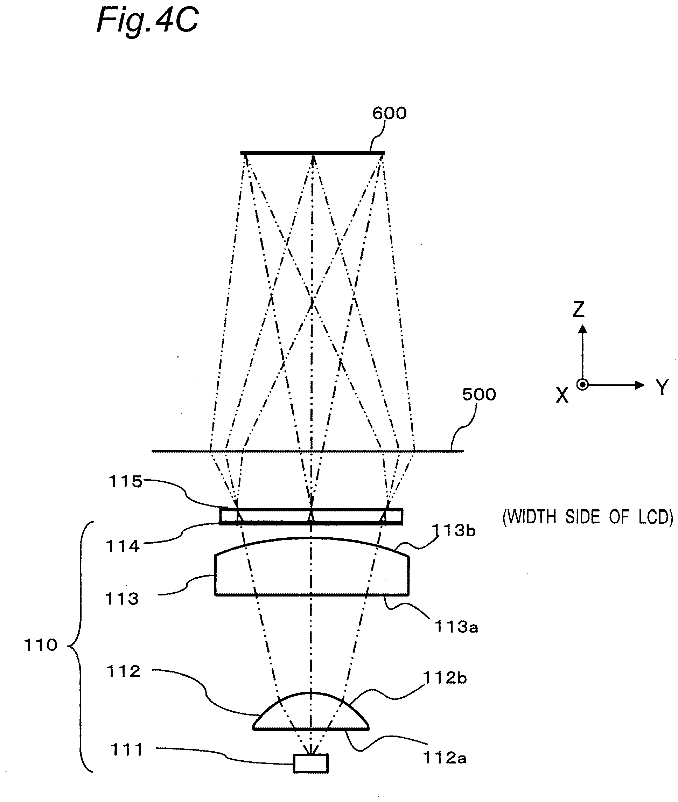

Fig. 4C is a view illustrating the optical paths from the light source unit 111 to the eye-box 600 when seen from the X-axis direction. The first lens 112 deflects the emission lights from the light source unit 111 so that each emission light uniformly illuminates the diffusion plate 114. That is, the refractive power of the first lens 112 is set so as to uniformly illuminate the entire surface of the liquid crystal panel 115. By doing so, the liquid crystal panel 115 is efficiently and uniformly illuminated.

A focal length of the first lens 112 in the X-axis direction is set such that the emission light from each of the first light source element 111a and the second light source element 111b is irradiated on the same region of the liquid crystal panel 115 so that the emission lights are superimposed each other. Specifically, the first lens 112 is designed such that the focal length of the first lens 112 in the X-axis direction is the same value as distance from an optical center of the first lens 112 to the liquid crystal panel 115.

In addition, when the emission light from each of the first light source elements 111a and the second light source elements 111b is irradiated on substantially the same region of the liquid crystal panel 115 so that the emission lights are superimposed each other, the focal length of the first lens 112 in the X-axis direction may be set to a value larger than the distance from the optical center of the first lens 112 to the liquid crystal panel 115.

A focal length of the first lens 112 in the Y-axis direction is set so that the emission lights from the light source unit 111 are concentrated on the liquid crystal panel 115. In most cases, an external shape of the first lens 112 is smaller than an external shape of the liquid crystal panel 115. Therefore, the focal length of the first lens 112 in the Y-axis direction is set to be a value larger than the distance from the optical center of the first lens 112 to the light source unit 111.

The second lens 113 is used for adjusting an incident angle of the emission light from the first lens 112 into the liquid crystal panel 115. That is, the second lens 113 deflects the emission light from the first lens 112 in a direction inclined at a predetermined angle. The predetermined angle is set such that the emission angle α1 in the X-axis direction and an emission angle α2 in the Y-axis direction with respect to the emission angle at the central portion of the liquid crystal panel 115 as shown in Fig. 3A and Fig. 3B are obtained at the end portion. That is, the refractive power of the second lens 113 is set so as to have the emission angle corresponding to the virtual image optical system 500. At this time, as shown in Fig. 4A and Fig. 4C, a plurality of light source elements 111a, 111b and the eye-box 600 are conjugate, and the eye-box 600 is efficiently illuminated. As described above, the second lens 113 is not indispensable.

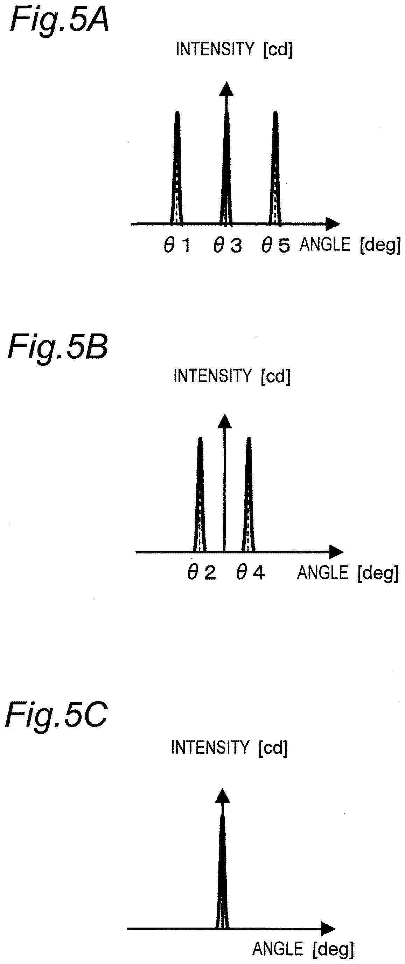

Fig. 5A illustrates an angle characteristic in the X-axis direction of light beams that enter a central portion of the diffusion plate 114 when the first light source elements 111a emit light, and Fig. 5B illustrates an angle characteristic in the X-axis direction of light beams that enter the central portion of the diffusion plate 114 when the second light source elements 111b emit light. The diffusion plate 114 is set so that its emission light passes through the virtual image optical system 500 and finally has an expansion corresponding to a width of the eye-box 600 in the X-axis direction. As shown in Fig. 5A, Fig. 5B, since the angle characteristic in the X-axis direction of the light beams that enter the diffusion plate 114 is discontinuous, in order to obtain a continuous angle characteristic, it is desirable that a diffusion angle of the diffusion plate 114 has a value not less than incident angle differences θ3-θ1, θ5-θ3, and θ4-θ2. At this time, an inflection point of the angle characteristic derived from the first light source element 111a and the second light source element 111b disappears, and a luminance change of the virtual image visually recognized by the eye-box 600 is reduced. In addition, when each of the first light source elements 111a and the second light source elements 111b is arranged at the same interval, 03-01, 05-03, and 04-02 are equal.

Fig. 5C illustrates an angle characteristic in the Y-axis direction of the light beams that enter the central portion of the diffusion plate 114 when the first light source elements 111a and the second light source elements 111b emit light. The diffusion plate 114 is set so that light in which an emission light of the diffusion plate 114 passes through the virtual image optical system 500 finally has an expansion corresponding to a width of the eye-box 600 in the Y-axis direction. As shown in Fig. 5C, the angle characteristic in the Y-axis direction of the light beams entering the diffusion plate 114 has substantially no expansion, so that it is desirable that the diffusion angle of the diffusion plate 114 has a value not less than a divergence angle corresponding to the width of the eye-box 600 in the Y-axis direction.

In addition, with respect to the diffusion angle of the diffusion plate 114, preferable values may be different between the X-axis direction and the Y-axis direction. In this case, as material of the diffusion plate 114, a member having different diffusibilities (diffusion angle) in the X-axis direction and the Y-axis direction may be used. For example, the diffusion plate whose concaves and convexes on a surface thereof are elliptical may be used. Alternatively, after the interval between the first light source elements 111a and the second light source elements 111b may be adjusted, the first light source elements 111a and the second light source elements 111b may be arranged.

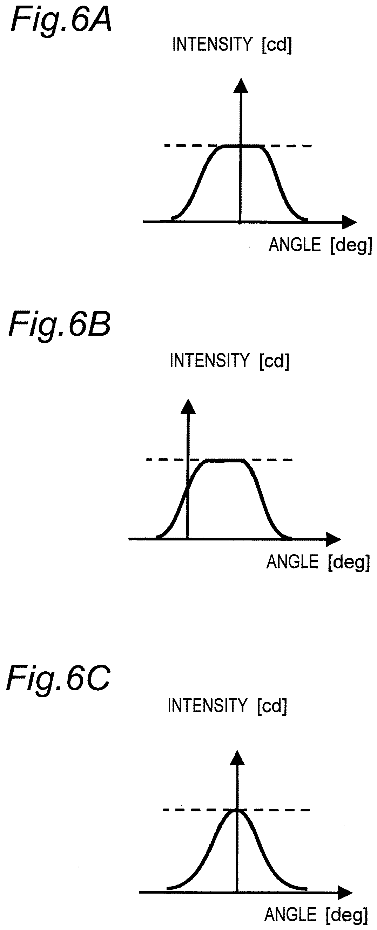

Fig. 6A is a graph illustrating an angle characteristic of the emission light at the central portion in the X-axis direction that is the longitudinal direction of the liquid crystal panel 115 of the present exemplary embodiment. Fig. 6B is a graph illustrating a light distribution characteristic of the emission light at the end portion in the X-axis direction that is the longitudinal direction of the liquid crystal panel 115 of the present exemplary embodiment. Fig. 6C is a graph illustrating a light distribution characteristic of the emission light at the central portion in the Y-axis direction that is the width direction of the liquid crystal panel 115 of the present exemplary embodiment. In Fig. 6A to Fig. 6C, a vertical axis of each graph indicates intensity of the light of the liquid crystal panel 115, and a unit is candela. A horizontal axis of each graph indicates a light distribution angle of the light of the liquid crystal panel 115, and a unit is degree.

With reference to Fig. 6A and Fig. 6B, at the central portion of the liquid crystal panel 115, there is a peak of intensity of the emission light in the normal direction of the emission surface 115b of the liquid crystal panel 115, whereas at the end portion of the liquid crystal panel 115, the intensity of the emission light has a peak in a direction inclined to an outside of the liquid crystal panel 115 with respect to the normal direction. Further, as shown in Fig. 6A and Fig. 6C, in the liquid crystal panel 115 of the present exemplary embodiment, the light distribution angle in the X-axis direction is larger than the light distribution angle in the Y-axis direction. As a result, in the head-up display 100 displaying the virtual image 400 larger than an area of the liquid crystal panel 115, the virtual image having a uniform luminance distribution is visually recognized in the eye-box 600.

### [1-1-4. Control of light source element]

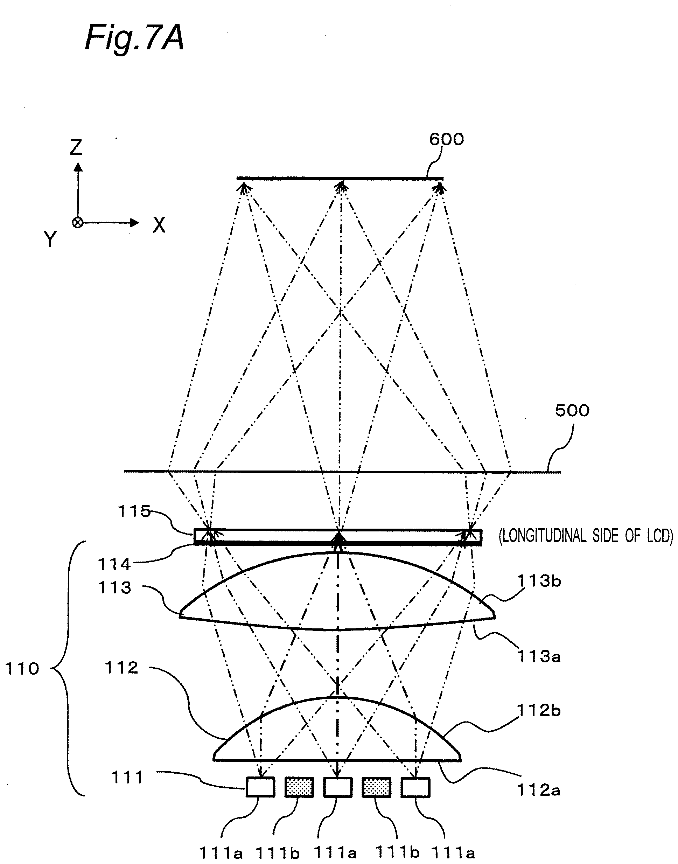

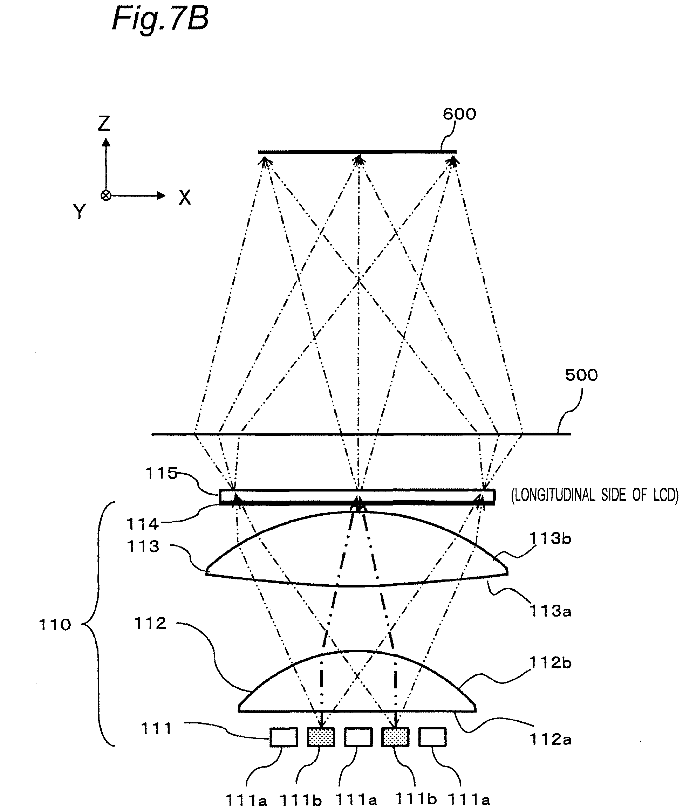

Fig. 7A and Fig. 7B are views schematically illustrating a method of controlling the light source unit 111 of the head-up display 100 according to the present exemplary embodiment. According to the present exemplary embodiment, by controlling a light emitting state of each of the first light source element 111a and the second light source element 111b, a specific color is displayed with high luminance.

Fig. 7A is a view illustrating the light beams when the three first light source elements 111a are emitting light. Each of the first light source elements 111a illuminates the entire surface of the liquid crystal panel 115. In addition, the first light source elements 111a illuminate also the entire surface of the eye-box 600 with the diffusion plate 114. Therefore, the virtual image is visually recognized in the head-up display 100 by emitting light with the first light source elements 111a having the white luminescent colors.

Fig. 7B is a view illustrating the light beams when the two second light source elements 111b are emitting light. Each of the second light source elements 111b illuminates the entire surface of the liquid crystal panel 115. In addition, the second light source elements 111b illuminate also the entire surface of the eye-box 600 with the diffusion plate 114. Therefore, the virtual image of red display is visually recognized in the head-up display 100 by emitting light with the second light source elements 111b having the red luminescent colors.

Consequently, in normal display, the head-up display 100 emits light with the first light source elements 111a. In addition, the head-up display 100 reduces absorption by the liquid crystal panel 115 by emitting light with the second light source elements 111b when red is displayed with high luminance for a warning display or the like. For this reason, a red high-luminance display is efficiently realized.

In addition, in the normal display, the head-up display 100 emits lights with the first light source elements 111a, and when displaying red with high luminance for the warning display or the like, emits lights with all of the first light source elements 111a and the second light source elements 111b, so that a further red high-luminance display is realized.

### [1-2. Effects and so on]

As described above, according to the present exemplary embodiment, the head-up display 100 includes the light source unit 111 containing at least one or more first light source elements 111a emitting lights of the first luminescent color and at least one or more second light source elements 111b emitting lights of the second luminescent color different from the first luminescent color, the first light source elements 111a and the second light source elements 111b being arranged side by side in the first direction, the first lens 112 that makes the light emitted from the light source unit 111 enter from the incident surface and emit from the emission surface, the diffusion plate 114 (an example of the diffusion member) disposed at the side of the emission surface of the first lens 112, the liquid crystal panel 115 (an example of the spatial light modulation element) that makes the light emitted from the light source unit 111 and transmitted through the first lens 112 and the diffusion plate 114 enter from the incident surface, modulates the light with image information, and makes the light emit from the emission surface, and the reflective optical unit 130 that projects the light emitted from the liquid crystal panel 115. The first lens 112 changes the optical path of the light emitted from the light source unit 111 so that the lights emitted from the first light source element 111a and the second light source element 111b are superimposed in the predetermined region on the incident surface of the liquid crystal panel 115.

According to this configuration, a plurality of the luminescent colors are provided, each of the luminescent colors illuminates the entire surfaces of the liquid crystal panel 115 and the eye-box 600. That is, by controlling ON/OFF of the light emission of the first light source element 111a having the white luminescent color and the light emission of the second light source element 111b having the red luminescent color, the specific color is efficiently displayed with high luminance.

### (Second exemplary embodiment)

### [2-1. Structure]

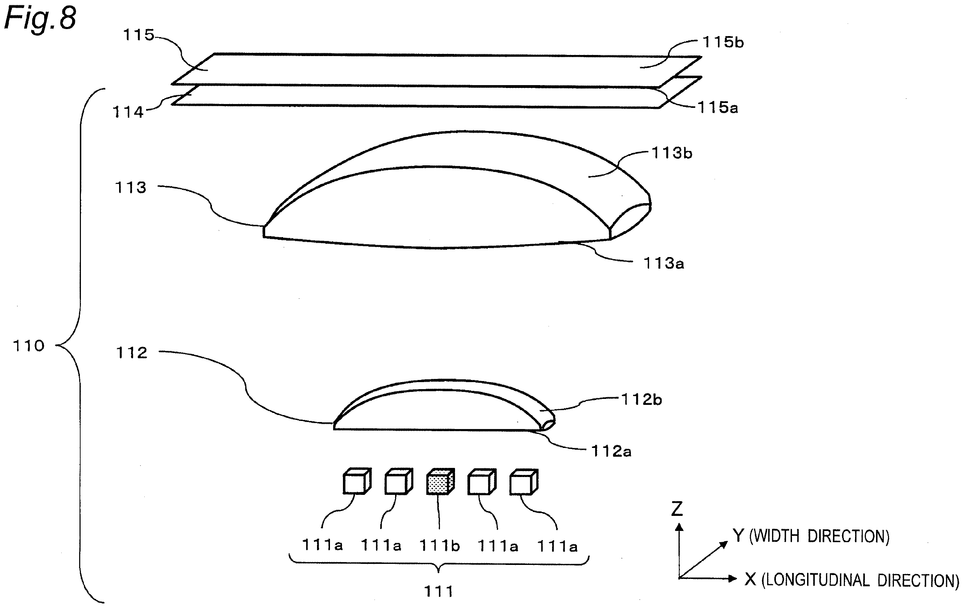

According to the head-up display 100 of the present exemplary embodiment, as shown in Fig. 8, the arrangement of the first light source elements 111a and the second light source element 111b of the light source unit 111 and the diffusion angle of the diffusion plate 114 are different from those of the first exemplary embodiment, other structures are the same as those in the first exemplary embodiment.

In the display unit 120 of the head-up display 100 according to the present exemplary embodiment, the second light source element 111b is disposed only in a center of the light source unit 111. That is, the one second light source element 111b is arranged at a center of the four first light source elements 111a.

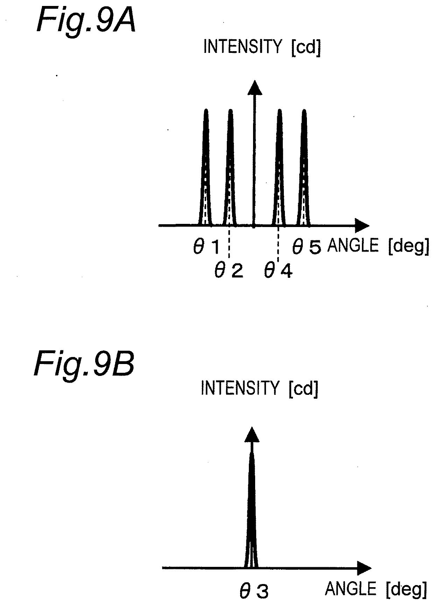

Fig. 9A is a view illustrating the angle characteristic in the X-axis direction of the light beams that enter the central portion of the diffusion plate 114 when the first light source elements 111a emit light, and Fig. 9B is a view illustrating the angle characteristic in the X-axis direction of the light beam that enters the central portion of the diffusion plate 114 when the second light source element 111b emits light. The diffusion plate 114 is set so that its emission light passes through the virtual image optical system 500 and finally has an expansion corresponding to a width of the eye-box 600 in the X-axis direction. As shown in Fig. 9A, since the angle characteristic in the X-axis direction of the light beams that enter the diffusion plate 114 is discontinuous, in order to obtain the continuous angle characteristic, it is desirable that the diffusion angle of the diffusion plate 114 has a value not less than the incident angle differences θ2-θ1, θ4-θ2, and θ5-θ4. Further, as shown in Fig. 9B, the angle characteristic in the X-axis direction of the light beam entering the diffusion plate 114 has substantially no expansion, so that it is desirable that the diffusion angle of the diffusion plate 114 has a value not less than a divergence angle corresponding to the width of the eye-box 600 in the X-axis direction.

By doing like this, the entire surfaces of the liquid crystal panel 115 and the eye-box 600 are illuminated with respect to each of the luminescent colors of white (first luminescent color) and red (second luminescent color), and by controlling ON/OFF of the light emission of the four first light source elements 111a and the light emission of the second light source element 111b, the specific color is efficiently displayed with high luminance.

### (Other exemplary embodiments)

As described above, the first exemplary embodiment and the second exemplary embodiment have been described as examples of the technique disclosed in the present application. However, the technique in the present disclosure is not limited to the above exemplary embodiments, and may be also applied to embodiments in which change, replacement, addition, omission, and so on are performed. In addition, the respective components described in the above exemplary embodiments may be combined to form a new exemplary embodiment. Then, other embodiments will be exemplified below.

In the above exemplary embodiments, although the liquid crystal panel 115 is used as the spatial light modulation element, other display elements may be used as long as it is a transmission type display device. For example, a Micro Electro Mechanical Systems (MEMS) shutter display may be used.

Although the example in which the liquid crystal panel 115 is disposed so as to be orthogonal to principal light beams of the plurality of light source elements 111a, 111b is described, the liquid crystal panel 115 may be arranged not to be orthogonal but inclined.

Also Fresnel lenses may be used for the emission surfaces and the incident surfaces of the first lens 112 and the second lens 113. As a result, reduction of a thickness of each of the lenses is achieved.

Although a convex lens is used as the first lens 112, also Total Internal Reflection (TIR) lens may be used. Thereby, the lights from the plurality of light source elements 111a, 111b are efficiently emitted to the second lens 113, so that light utilization efficiency is improved.

According to the above exemplary embodiments, in the lighting device 110, although only one row of the plurality of light source elements 111a, 111b is arranged in the Y-axis direction (width direction of the liquid crystal panel 115), in the Y-axis direction, the light source elements 111a, 111b may be arranged in a plurality of rows.

In the above exemplary embodiments, although the diffusion plate 114 is disposed between the second lens 113 and the liquid crystal panel 115, the diffusion plate 114 may be disposed between the first lens 112 and the second lens 113. Although it is inferior in terms of efficiency, the luminance unevenness is reduced even at this position.

Although the windshield 230 is exemplified as a member for reflecting the emission light from the head-up display 100, it is not limited to the windshield and a combiner may be used.

Although the LED is exemplified as the light source, also a laser diode, an organic light-emitting diode, or the like may be used.

Although the first luminescent color and the second luminescent color are exemplified for two types of white and red as the luminescent color of the light source, other colors such as blue or green may be used as the second luminescent color. In particular, when the second luminescent color is the same as the luminescent color of a color filter of the liquid crystal panel 15 that is the spatial light modulation element, high luminance is obtained. A color that the head-up display is desired to display with high luminance may be set as the second luminescent color. In addition, a light emitting element that emits a third luminescent color different from the first and second luminescent colors may be provided, and may display the second luminescent color and the third luminescent color with high luminance or may display a luminescent color in which the second luminescent color and the third luminescent color are mixed with high luminance. Similarly, a light emitting element emitting four or more types of luminescent colors may be provided.

A moving object on which the head-up display 100 of the present exemplary embodiment is mounted is not limited to an automobile vehicle, and includes a railway vehicle, a motorcycle, an aircraft, a helicopter, a ship, and other various devices for transporting persons.

The present disclosure is applied to a projection apparatus that allows visual recognition of the virtual image. Specifically, the present disclosure is applicable to a head-up display, and the like.

## Claims

1. A head-up display comprising:
a light source unit including at least one or more first light source elements emitting lights of a first luminescent color and at least one or more second light source elements emitting lights of a second luminescent color different from the first luminescent color that are arranged side by side in a first direction;
a first lens including an incident surface through which the light emitted from the light source unit enters and an emission surface from which the incident light emits;
a diffusion member disposed at a side of the emission surface of the first lens;
a spatial light modulation element that includes an incident surface through which the light emitted from the light source unit and transmitted through the first lens and the diffusion member enters, modulates the light with image information, and makes the light emit from an emission surface; and
an optical unit that projects the light emitted from the spatial light modulation element, wherein
the first lens changes an optical path of the light emitted from the light source unit, and the lights emitted from the first light source element and the second light source element are superimposed in a predetermined region on the incident surface of the spatial light modulation element.

2. The head-up display according to claim 1, further comprising at least two display states in which combinations of light emitting states of the first light source element and the second light source element are different from each other.

3. The head-up display according to claim 1 or 2, further comprising a first display state in which only the first light source element is emitted.

4. The head-up display according to any one of claims 1 to 3, further comprising a second display state in which only the second light source element is emitted.

5. The head-up display according to any one of claims 1 to 4, further comprising a third display state in which both the first light source element and the second light source element are emitted.

6. The head-up display according to any one of claims 1 to 5, wherein with respect to incident angles at which emission lights of a plurality of the first light source elements enter the diffusion member, a difference between the incident angles of the adjacent first light source elements is less than or equal to a diffusion angle of the diffusion member.

7. The head-up display according to any one of claims 1 to 6, wherein with respect to incident angles at which emission lights of a plurality of the second light source elements enter the diffusion member, a difference between the incident angles of the adjacent second light source elements is less than or equal to a diffusion angle of the diffusion member.

8. The head-up display according to any one of claims 1 to 7, wherein in the light source unit, the first light source element and the second light source element are alternately arranged in the first direction.

9. The head-up display according to any one of claims 1 to 8, wherein a focal length of the first lens in the first direction is set to a value greater than or equal to a distance from an optical center of the first lens to the spatial light modulation element.

10. The head-up display according to any one of claims 1 to 9, wherein the focal length of the first lens in the first direction is different from a focal length of the first lens in a second direction orthogonal to the first direction.

11. The head-up display according to any one of claims 1 to 10, further comprising a second lens that is disposed at a side of an emission surface of the first lens, wherein
at least one of an incident surface and the emission surface of the second lens is a convex surface.

12. The head-up display according to claim 11, wherein a focal length of the second lens in the first direction is different from a focal length of the second lends in the second direction orthogonal to the first direction.

13. The head-up display according to any one of claims 1 to 12, wherein the first lens changes the optical path of the light emitted from the light source unit, and each of the lights emitted from the first light source element and the second light source element is irradiated on an entire incident surface of the spatial light modulation element.

14. The head-up display according to any one of claims 1 to 6, wherein the second light source element is arranged only in a center of the light source unit in the first direction.

15. The head-up display according to claim 14, wherein the diffusion member has a diffusion angle greater than or equal to a divergence angle corresponding to a vertical direction of an eye-box in which a virtual image is visually recognized.

16. The head-up display according to any one of claims 1 to 15, wherein the second luminescent color is identical to a luminescent color of a color filter of the spatial light modulation element.

17. The head-up display according to any one of claims 1 to 16, mounted on a moving object including a windshield.

18. A moving object comprising the head-up display according to any one of claims 1 to 17.
